# EUROPÄISCHE PATENTSCHRIFT

(11) **EP 1 077 127 B1**
(45) Veröffentlichungstag und Bekanntmachung des Hinweises auf die Patenterteilung: **02.11.2006**
(21) Anmeldenummer: 00114391.6
(22) Anmeldetag: 05.07.2000
(51) Int. Cl.: B32B 5/02, B32B 9/02

(54) **Verbundwerkstoff mit einer Zwischenschicht, welche mindestens durch eine Naturfasermatte aus nachwachsenden Rohstoffen gebildet ist.**
Composite material having an intermediate layer comprising at least a fiber mat made of regenerable natural fibers
Matériau composite avec une couche intermédiaire contenant au moins une nappe en fibres naturelles régénérables

(30) Priorität: 18.08.1999 DE 19939227
(43) Veröffentlichungstag der Anmeldung: 21.02.2001
(73) Patentinhaber: MöllerTech GmbH, 33649 Bielefeld (DE)
(72) Erfinder: Beckmann, Friedhelm, Dipl.-Ing., 32120 Hiddenhausen (DE)
(74) Vertreter: Schirmer, Siegfried

(56) Entgegenhaltungen:
- EP-A- 0 744 261
- DE-A- 3 935 689
- DE-A- 4 139 226
- DE-A- 4 403 977
- DE-A- 4 444 906
- DE-U- 29 611 298

## Beschreibung

Die Erfindung betrifft einen Verbundwerkstoff mit einer ersten und einer zweiten, mit gegenseitigem Abstand angeordneten äußeren Deckschicht, und einer zwischen den Deckschichten angeordneten Zwischenschicht.

Bei der Herstellung von Verbundwerkstoffen werden in der Regel Deckschichten, die aus Metall, Kunststoff, Holzfurnieren oder sonstigen Laminaten bestehen können, verwendet und ein beliebiger Zwischenraum dazwischen durch Einbringen einer Zwischenschicht aus Kunststoff oder geschäumtem Kunststoff hergestellt. Dabei müssen die plattenförmigen Deckschichten in einem gewünschten Abstand zueinander fixiert und ein Austreten der plastischen, klebrigen Kunststoffmasse durch eine seitliche Begrenzung vermieden werden. Bei Verwendung einer schäumfähigen Masse für die Zwischenschicht muß eine Druckentlastung erfolgen, damit sich der Schaum frei entfalten kann und nicht durch eine Gewichtsbelastung komprimiert wird. Die Eigenschaften derartiger Verbundwerkstoffe werden sowohl durch die Deckschichten als auch durch die eingebrachte Zwischenschicht bestimmt. Je nach Masse für die Zwischenschicht muß eine Druckentlastung erfolgen, damit sich der Schaum frei entfalten kann und nicht durch eine Gewichtsbelastung komprimiert wird. Die Eigenschaften derartiger Verbundwerkstoffe werden sowohl durch die Deckschichten als auch durch die eingebrachte Zwischenschicht bestimmt. Je nach Materialaufbau muß die Verbundwirkung durch zusätzliche Haftvermittler oder einen physikalisch oder chemisch abbindenden Klebstoff verstärkt werden. Nachteilig ist hierbei, daß bei diesen Vorgängen Lösungsmittel o.ä. freigesetzt werden, die zu einer Umweltbelastung führen. Bei kleineren Plattensegmenten oder dreidimensional verformten Sandwichbauteilen müssen diese in aufwendigen Formen hergestellt werden, die die gewünschte Kontur beinhalten und den Raum zwischen den Deckschichten bzw. Plattenelementen dicht abschließen, damit die die Zwischenschicht bildende, ggf. schäumfähige Masse nicht aus dem Zwischenraum austritt. Das zwischen den Deckschichten befindliche Material der Zwischenschicht weist üblicherweise eine gleichmäßige Konsistenz auf, so daß härtere oder nachgiebigere Bereiche innerhalb eines Bauteils nicht oder nur in einem mehrstufigen Prozeß hergestellt werden können.

Aus dem Dokument EP 0 744 261 A1 ist ein Verbundbauteil, insbesondere Verbundverkleidungsteil bekannt, bei dem ein Verstärkungsmaterial ganz oder teilweise aus recycelten Naturfasern, insbesondere Jute- oder Sisalfasern, gebildet ist. Das als Verstärkungseinlage dienende Naturfasermaterial wird ungerichtet, wirr, gerichtet, geformt oder vorgeformt in das Verbundbauteil eingebracht. Als Bindestoff werden thermoplastische synthetische Rohstoffe oder Duroplaste oder einer Kombination aus Duroplasten und Thermoplasten oder ein biologischer Wirkstoff eingesetzt. Mindestens eine äußere Sichtseite des Verbundbauteils ist mit einem Dekormaterial versehen, bei dem es sich um eine Folie, einen Teppich, ein Textil, Leder, Kunstleder oder Echtholz handeln kann.

Im Dokument DE 44 03 977 A1 ist ein Mehrschichtkörper beschrieben, der insbesondere als einstückiges sowie mehrlagiges Innenverkleidungsteil für Kraftfahrzeuge verwendbar ist und der mindestens eine als Träger dienende, flächige Trageschicht, eine vorzugsweise weichelastische Zwischenschicht und eine Dekorschicht umfaßt. In der Trageschicht werden Naturfasern als Füllstoff verwendet, wobei zusätzlich recycelbarer, thermoplastischer Kunststoff als Bindemittel genutzt wird.

In dem Dokument DE 44 44 906 A1 ist die Herstellung einer mehrschichtigen Gartentischplatte offenbart, die je eine oben und eine unten angeordnete Außenschicht aufweist, die jeweils aus mindestens einer Kunstharz getränkten Glasfasermatte besteht. Zwischen den beiden Außenschichten ist als Distanzschicht mindestens eine bei der Tischplattenherstellung teilweise zusammengedrückte und mit Kunstharz getränkte Fasermatte aus Naturfasern vorgesehen. Bei der Herstellung der Gartentischplatte wird die Naturfasermatte von einer ursprünglichen Dicke auf eine geringere Dicke zusammengedrückt.

Die Aufgabe der Erfindung besteht darin, einen Verbundwerkstoff anzugeben, der ohne aufwendige Fixierung des gegenseitigen Abstands der Deckschichten hergestellt werden kann, und der relativ unaufwendig in eine gewünschte dreidimensionale Kontur gebracht werden kann.

Diese Aufgabe wird erfindungsgemäß durch einen Verbundwerkstoff mit einer ersten und einer zweiten, mit gegenseitigem Abstand angeordneten äußeren Deckschicht, insbesondere aus Metall, Kunststoffen oder Holzfurnier, und einer zwischen den Deckschichten angeordneten Zwischenschicht gelöst, welcher sich dadurch auszeichnet, daß die Zwischenschicht durch mindestens eine Naturfasermatte aus nachwachsenden Rohstoffen gebildet ist, die mit schmelz- und/oder schäumbaren Partikeln und/oder aushärtbaren Stoffen durchsetzt ist.

Weitere Vorteile und Merkmale der Erfindung ergeben sich aus der nachfolgenden Beschreibung von Ausführungsbeispielen, wobei auf eine Zeichnung Bezug genommen ist, in der
Fig. 1 eine schematische Querschnittsansicht eines erfindungsgemäßen Verbundwerkstoffs zeigt, bei dem die Zwischenschicht relativ schwach verdichtet ist,
Fig. 2 eine Ansicht entsprechend Fig. 1 zeigt, bei der die Zwischenschicht relativ stark verdichtet ist und
Fig. 3 eine schematische Querschnittsansicht durch einen erfindungsgemäßen Verbundwerkstoff zeigt, bei dem die Zwischenschicht lokal unterschiedlich stark verdichtet ist.

Die vorteilhaften Eigenschaften des erfindungsgemäßen Verbundwerkstoffs werden durch Verwendung einer oder mehrerer Naturfasermatten erreicht, die aus nachwachsenden Rohstoffen, wie beispielsweise Flachs, Hanf, Jute, Kenaf, Sisal oder einer Kombination daraus bestehen, und mit schmelz- oder schäumbaren Fasern oder Partikeln bzw. aus in sonstiger Weise aushärtbaren Stoffen, wie unausgehärteten Duroplasten u.ä., durchsetzt sind. Im Falle eines schmelzfähigen Materials besteht dieses aus einem Werkstoff, dessen Schmelztemperatur unter der für Naturfasern meist kritischen Temperatur von etwa 240°C liegt. Verwendet werden können deshalb beispielsweise Polypropylen, LD/HD-Polyethylen oder EVA, bevorzugt aber Polyamid 11 oder Polyamid 12. Der Naturfaseranteil beträgt dabei bevorzugt zwischen 30% und 95% mit einer entsprechenden Zumischung der die Fasern bindenden Komponente.

Die Herstellung erfolgt so, daß die bindende, z.B. schmelzfähige Komponente durch Energiezufuhr zum Aufschmelzen gebracht wird und das Material der Zwischenschicht dabei kontinuierlich oder diskontinuierlich zwischen Deckschichten (Plattenelementen) aus Metall, wie Aluminium, Kupfer oder Nickel, und/oder aus duroplastischen und/oder thermoplastischen Kunststoffen oder aus Holz oder sonstigen Laminaten eingebracht und im warmen Zustand mit den Deckschichten verpreßt wird. Der schmelzförmige Werkstoff zwischen den Naturfasern führt dazu, daß zum einen die Fasern untereinander gebunden werden und daß zum anderen an den jeweligen Oberflächen ein Schmelzefilm entsteht, der zu einer Verklebung mit den Werkstoffen der Deckschichten führt.

Je nach gewünschter Festigkeit und Steifigkeit des Verbundwerkstoffs kann dabei durch unterschiedliche Verdichtung die Zwischenschicht vorverdichtet, vollverdichtet oder bei entsprechende Gestaltung des Werkstoffs bzw. Bauteils in Teilbereichen mehr oder weniger stark verdichtet werden.

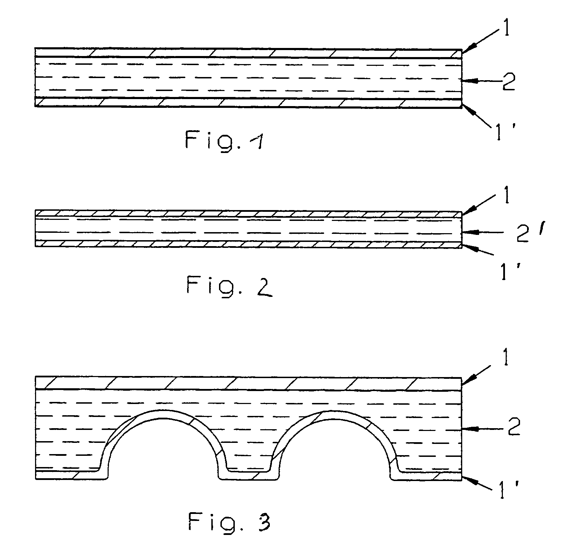

Nach Fig. 1 ist zwischen einer oberen Deckschicht 1 und einer unteren Deckschicht 1' eine schwach verdichtete Naturfasermatte 2 angeordnet. Nach Fig. 2 ist eine stark verdichtete Naturfasermatte 2' zwischen den beiden Deckschichten 1,1' vorgesehen.

Nach Fig. 3 ist eine erste (obere) Deckschicht 1 oben, während eine zweite (untere) Deckschicht 1' profiliert bzw. gewellt ausgebildet ist und die zwischen den Deckschichten 1, 1' angeordnete, aus einer Naturfasermatte 2 gebildete Zwischenschicht örtlich unterschiedlich stark verdichtet ist. Die dreidimensional gestaltete Deckschicht 1' kann ihre Form bereits vorab besitzen oder alternativ erst bei Herstellung des Verbundwerkstoffs in ihre gewünschte Form gebracht werden, während die Zwischenschicht im Zuge der Herstellung des Verbundwerkstoffs entsprechend verdichtet wird, wobei ein geringerer Abstand der Deckschichten einem höheren Verdichtungsgrad der Zwischenschicht entspricht.

Ein nicht vollverdichtetes Material läßt eine gewisse Flexibilität zwischen den aus Plattenelementen gebildeten Deckschichten zu, während ein vollverdichtetes Material zu einer festen Verbindung mit einer hohen Bauteilsteifigkeit führt. Derartige Sandwichelemente können ausgehend von Rollenware endlos bzw. kontinuierlich hergestellt werden, oder sie können aus entsprechenden Zuschnitten bauteilspezifisch hergestellt werden. Dabei können die Zuschnitte durch Freistanzungen so ausgelegt werden, daß eine Verbindung mit der einen oder anderen Deckschicht nur in Teilbereichen erfolgt und somit weitere Funktionen ermöglicht werden.

In Ausgestaltung der Erfindung können auch eine oder mehrere vollverpreßte Schichten mit einer oder mehreren Zwischenlagen aus weniger stark verdichteten Naturfasermatten bzw. -platten versehen werden, wie dieses insbesondere bei Bodenplatten zur Trittschalldämmung vorteilhaft ist. Zur Verbesserung der akustischen bzw. dämpfenden Eigenschaften kann als Mittelschicht zwischen den Naturfasermatten bzw. -platten auch eine Schicht aus z. B. Schaum, Gummi, thermoplastischen Elastomer eingefügt werden.

Weiterhin ist möglich, daß ein aus einem zunächst nur lockeren Verbund bestehendes Halbzeug später nochmals durch Energiezufuhr erwärmt und in einem darauffolgenden Arbeitsgang zu einem Bauteil beliebiger, zwei- oder dreidimensionaler Kontur verformt und durch Vorgabe verschiedener Preßkräfte örtlich unterschiedlich stark verdichtet wird. Dies ist auch bei Bauteilen möglich, die ein- oder beidseitig mit einer Metallplatte versehen sind und nach Energiezufuhr beispielsweise zu Verkleidungs- oder Dekorplatten umgeformt werden können. Dabei führt eine schwache Verdichtung der aus einer Naturfasermatte bzw. -platte bestehenden Zwischenschicht zu einem guten elektrischen Isolationseffekt und zu guter Wärmedämmung, während bei stärker verpreßten Platten eine hohe Bauteilsteifigkeit erreicht wird.

In weiterer Ausgestaltung der Erfindung können innen- oder außenliegende Bereiche der Zwischenschicht durch zusätzliche Verstärkungseinlagen mit z. B. Glas-, Kohle-, Aramid- oder Naturfasern oder sonstigen Verstärkungsgeweben verstärkt werden.

Eine oder beide Deckschichten 1, 1' können zusätzlich mit einem Dekormaterial 3 aus z. B. Textilmaterial, (Kunststoff-)Folie, Leder usw. versehen sein, was insbesondere dann zweckmäßig ist, wenn die betreffende Deckschicht aus verdichteten Naturfasern besteht.

### Aufstellung der Bezugszeichen:

- 1: Deckschicht
- 1': Deckschicht
- 2: Naturfasermatte (schwach verdichtet)
- 2': Naturfasermatte (stark verdichtet)
- 3: Dekormaterial

## Patentansprüche

1. Verbundwerkstoff mit einer ersten (1) und einer zweiten (1'), mit gegenseitigem Abstand angeordneten äußeren Deckschicht, insbesondere aus Metall, Kunststoff oder Holzfurnier, und einer zwischen den Deckschichten (1, 1') angeordneten Zwischenschicht, wobei die Zwischenschicht durch mindestens eine Naturfasermatte (2) aus nachwachsenden Rohstoffen gebildet ist, die mit schmelz- und/oder schäumbaren Partikeln und/oder aushärtbaren Stoffen durchsetzt ist, **dadurch gekennzeichnet, daß** die Zwischenschicht lokal unterschiedlich stark verdichtet ist.

2. Verbundwerkstoff nach Anspruch 1, **dadurch gekennzeichnet, daß** die mindestens eine Naturfasermatte (2) aus Flachs, Hanf, Jute, Kenaf, Sisal oder einer Kombination dieser Materialien besteht.

3. Verbundwerkstoff nach Anspruch 1 oder 2, **dadurch gekennzeichnet, daß** die schmelzbaren Partikel einen unter einer für die verwendeten Naturfasern kritischen Temperatur, insbesondere unter 240°C, liegenden Schmelzpunkt aufweisen.

4. Verbundwerkstoff nach einem der vorangehenden Ansprüche, **dadurch gekennzeichnet, daß** die schmelzbaren Partikel aus Polypropylen, LD- oder HD-Polyethylen, EVA, Polyamid 11 oder Polyamid 12 bestehen.

5. Verbundwerkstoff nach einem der vorangehenden Ansprüche, **dadurch gekennzeichnet, daß** der Naturfaseranteil der mindestens einen Naturfasermatte zwischen 30% und 95% und der Partikelanteil zwischen 5% und 20% beträgt.

6. Verbundwerkstoff nach einem der vorangehenden Ansprüche, **dadurch gekennzeichnet, daß** wenigstens ein Teil der schmelzbaren Partikel faserförmig ist.

7. Verbundwerkstoff nach einem der vorangehenden Ansprüche, **gekennzeichnet durch** mehrere Naturfasermatten gleicher oder unterschiedlicher Materialzusammensetzung und/oder gleichen oder unterschiedlichen Verdichtungsgrades.

8. Verbundwerkstoff nach einem der vorangehenden Ansprüche, **dadurch gekennzeichnet, daß** die Zwischenschicht einen vorgebbaren Verdichtungsgrad aufweist.

9. Verbundwerkstoff nach einem der vorangehenden Ansprüche, **dadurch gekennzeichnet, daß** der gegenseitige Abstand der Deckschichten (1, 1') dem Verdichtungsgrad der Zwischenschicht etwa umgekehrt proportional ist.

10. Verbundwerkstoff nach einem der vorangehenden Ansprüche, **dadurch gekennzeichnet, daß** die Zwischenschicht aus einer oder mehreren stark verdichteten Naturfasermatte(n) und einer oder mehreren weniger stark verdichteten Naturfasermatte(n) besteht.

11. Verbundwerkstoff nach einem der vorangehenden Ansprüche, **dadurch gekennzeichnet, daß** die Deckschichten aus Metall, insbesondere Aluminium, Kupfer, Nickel, aus duro- oder thermoplastischem Kunststoff, Holz, Laminat, verdichteten Naturfaserschichten oder Kombinationen daraus bestehen.

12. Verbundwerkstoff nach einem der vorangehenden Ansprüche, **dadurch gekennzeichnet, daß** der Verbundwerkstoff endlos hergestellt ist.

13. Verbundwerkstoff nach einem Ansprüche 1 bis 11, **dadurch gekennzeichnet, daß** der Verbundwerkstoff aus Zuschnitten von Deckschichten und Zwischenschicht hergestellt ist.

14. Verbundwerkstoff nach einem der vorangehenden Ansprüche, **dadurch gekennzeichnet, daß** die Zwischenschicht und/oder wenigstens eine Deckschicht eine oder mehrere Freistanzungen aufweisen.

15. Verbundwerkstoff nach einem der vorangehenden Ansprüche, **dadurch gekennzeichnet, daß** die Zwischenschicht mit Verstärkungseinlagen, insbesondere aus Glas-, Kohle-, Aramid- oder Naturfasern oder Verstärkungsgewebe, versehen ist.

16. Verbundwerkstoff nach einem der vorangehenden Ansprüche, **dadurch gekennzeichnet, daß** wenigstens eine Deckschicht mit einem Dekormaterial, insbesondere aus Kunststoffolie, Textilmaterial oder Leder, versehen ist.

17. Verbundwerkstoff nach einem der Ansprüche 1 bis 16, **dadurch gekennzeichnet, daß** die Zwischenschicht aus Schaum, Gummi oder thermoplastischem Elastomer gebildet ist.

## Claims

1. Composite material with a first outer cover layer (1) and a second outer cover layer (1') arranged at a mutual spacing, particularly of metal, synthetic material or wood veneer, and an intermediate layer arranged between the cover layers (1, 1'), wherein the intermediate layer is formed by at least one natural fibre mat (2) of regeneratable raw materials which is penetrated by meltable and/or foamable particles and/or hardenable substances, **characterised in that** the intermediate layer is compacted with locally different strength.

2. Composite material according to claim 1, **characterised in that** the at least one natural fibre mat (2) consists of flax, hemp, jute, kenaf, sisal or a combination of these materials.

3. Composite material according to claim 1 or 2, **characterised in that** the meltable particles have a melting point lying below a temperature critical for the natural fibres employed, particularly below 240° C.

4. Composite material according to one of the preceding claims, **characterised in that** the meltable particles consist of polypropylene, LD or HD polyethylene, EVA, polyamide 11 or polyamide 12.

5. Composite material according to one of the preceding claims, **characterised in that** the natural fibre proportion of the at least one natural fibre mat amounts to between 30% and 95% and the particle proportion to between 5% and 20%.

6. Composite material according to one of the preceding claims, **characterised in that** at least a part of the meltable fibres is fibrous.

7. Composite material according to one of the preceding claims, **characterised by** several natural fibre mats of the same or different material composition and/or the same or different degree of compaction.

8. Composite material according to one of the preceding claims, **characterised in that** the intermediate layer has a predeterminable degree of compaction.

9. Composite material according to one of the preceding claims, **characterised in that** the mutual spacing of the cover layers (1, 1') is approximately inversely proportional to the degree of compaction of the intermediate layer.

10. Composite material according to one of the preceding claims, **characterised in that** the intermediate layer consists of one or more strongly compacted natural fibre mats and one or more less strongly compacted natural fibre mats.

11. Composite material according to one of the preceding claims, **characterised in that** the cover layers consist of metal, particularly aluminium copper or nickel, thermosetting or thermoplastic plastics material, wood, laminate, compacted natural fibre layers or combinations thereof.

12. Composite material according to one of the preceding claims, **characterised in that** the composite material is produced endlessly.

13. Composite material according to one of claims 1 to 11, **characterised in that** the composite material is produced from blanks of cover layers and intermediate layer.

14. Composite material according to one of the preceding claims, **characterised in that** the intermediate layer and/or at least one cover layer has or have one or more punchings-free.

15. Composite material according to one of the preceding claims, **characterised in that** the intermediate layer is provided with reinforcing inlays, particularly of glass, carbon, aramide or natural fibres or reinforcing fabrics.

16. Composite material according to one of the preceding claims, **characterised in that** at least one cover layer is provided with a decorative material, particularly of plastics material film, textile material or leather.

17. Composite material according to one of claims 1 to 16, **characterised in that** the intermediate layer is formed from foam, rubber or thermoplastic elastomer.

## Revendications

1. Matériau composite comportant une première (1) et une deuxième (1') couches de recouvrement extérieures disposées à une distance réciproque, en particulier en métal, en matières plastiques ou en placage bois, et une couche intermédiaire disposée entre les couches de recouvrement (1, 1'), la couche intermédiaire étant constituée d'au moins une nappe de fibres naturelles (2) constituée de matières premières renouvelables et entremêlée de particules fusibles et/ou expansibles et/ou de substances durcissables,
**caractérisé en ce que**
la couche intermédiaire est compressée différemment à certains endroits.

2. Matériau composite selon la revendication 1,
**caractérisé en ce qu'**
au moins une nappe en fibres naturelles est constituée de lin, de chanvre, de jute, de kenaf, de sisal ou d'une combinaison de ces matériaux.

3. Matériau composite selon la revendication 1 ou 2,
**caractérisé en ce que**
les particules fusibles présentent un point de fusion inférieur à la température critique pour les fibres naturelles utilisées, en particulier inférieur à 240 °C.

4. Matériau composite selon l'une quelconque des revendications précédentes,
**caractérisé en ce que**
les particules fusibles sont constituées de polypropylène, de polyéthylène BD ou HD, d'EVA, de polyamide 11 ou de polyamide 12.

5. Matériau composite selon l'une quelconque des revendications précédentes,
**caractérisé en ce que**
la proportion de fibres naturelles d'au moins une nappe en fibres naturelles est comprise entre 30 et 95 % et la proportion de particules entre 5 et 20 %.

6. Matériau composite selon l'une quelconque des revendications précédentes,
**caractérisé en ce qu'**
au moins une partie des particules fusibles est en forme de fibres.

7. Matériau composite selon l'une quelconque des revendications précédentes,
**caractérisé par**
plusieurs nappes en fibres naturelles ayant la même composition ou une composition différente et/ou un degré de compression identique ou différent.

8. Matériau composite selon l'une quelconque des revendications précédentes,
**caractérisé en ce que**
la couche intermédiaire présente un degré de compression prédéfinissable.

9. Matériau composite selon l'une quelconque des revendications précédentes,
**caractérisé en ce que**
la distance réciproque entre les couches de recouvrement (1, 1') est approximativement inversement proportionnelle au degré de compression de la couche intermédiaire.

10. Matériau composite selon l'une quelconque des revendications précédentes,
**caractérisé en ce que**
la couche intermédiaire est constituée d'une ou plusieurs nappe(s) en fibres naturelles très compressée(s) et d'une ou plusieurs nappe(s) en fibres naturelles moins compressée(s).

11. Matériau composite selon l'une quelconque des revendications précédentes,
**caractérisé en ce que**
les couches de recouvrement sont constituées de métal, en particulier d'aluminium, de cuivre, de nickel, de matière plastique duroplastique ou thermoplastique, de bois, de laminé, de couches en fibres naturelles compressées ou d'une combinaison de ces matériaux.

12. Matériau composite selon l'une quelconque des revendications précédentes,
**caractérisé en ce que**
le matériau composite est fabriqué sans fin.

13. Matériau composite selon l'une quelconque des revendications 1 à 11,
**caractérisé en ce que**
le matériau composite est fabriqué à partir de pièces découpées dans des couches de recouvrement et une couche intermédiaire.

14. Matériau composite selon l'une quelconque des revendications précédentes,
**caractérisé en ce que**
la couche intermédiaire et/ou au moins une couche de recouvrement présente(nt) un ou plusieurs découpages libres.

15. Matériau composite selon l'une quelconque des revendications précédentes,
**caractérisé en ce que**
la couche intermédiaire est munie de garnitures de renfort, en particulier en fibres de verre, de carbone, d'aramide ou naturelles ou en tissé de renfort.

16. Matériau composite selon l'une quelconque des revendications précédentes,
**caractérisé en ce qu'**
au moins une couche de recouvrement est munie d'un matériau décor, en particulier en feuille plastique, en matériau textile ou en cuir.

17. Matériau composite selon l'une quelconque des revendications 1 à 16,
**caractérisé en ce que**
la couche intermédiaire est constituée de mousse, de caoutchouc ou d'élastomère thermoplastique.
